# FASCICULE DE BREVET EUROPEEN

(11) **EP 0 438 328 B1**
(45) Date de publication et mention de la délivrance du brevet: **20.12.1995**
(21) Numéro de dépôt: 91400027.8
(22) Date de dépôt: 09.01.1991
(51) Int. Cl.: B32B 17/10, C03C 27/12

(54) **Dispositif pour l'assemblage par pressage des vitrages feuilletés**
Vorrichtung zur Verbindung durch Pressen von Verbundglasscheiben
Apparatus for assembling by pressing laminated glass

(30) Priorité: 16.01.1990 FR 9000421
(43) Date de publication de la demande: 24.07.1991
(73) Titulaire: SAINT-GOBAIN VITRAGE, 92400 Courbevoie (FR)
(72) Inventeur: Didelot, Claude, F-60150 Thourotte (FR); Triffaux, Francis, F-60150 Thourotte (FR); Wattiau, Gilles, F-60200 Compiegne (FR)
(74) Mandataire: Muller, René

(56) Documents cités:
- EP-A- 0 015 209
- EP-A- 0 189 345
- EP-A- 0 351 288
- DE-A- 2 033 819

## Description

La présente invention concerne la fabrication des vitrages feuilletés et en particulier un dispositif pour l'assemblage des éléments constitutifs d'un vitrage feuilleté par pressage, en particulier par calandrage, c'est-à-dire par passage de l'empilage desdits éléments constitutifs, que l'on désignera aussi par vitrage dans la suite de la description, entre des moyens supérieurs et des moyens inférieurs de pressage.

Les dispositifs connus de calandrage, décrits par exemple dans la publication de brevet français 2 053 104, sont généralement équipés de deux séries de galets ou rouleaux de pressage : une série de rouleaux inférieurs disposés les uns à côté des autres, leur position pouvant être réglée indépendemment de façon à obtenir une courbure correspondant à la courbure transversale désirée qui est généralement la courbure moyenne du vitrage, et une série de rouleaux supérieurs disposés sensiblement de la même façon. Dans les dispositifs connus, les deux séries de rouleaux sont montées chacune sur une poutre transversale appartenant à un cadre pouvant pivoter autour d'un axe horizontal, l'ensemble constituant un équipage mobile, de sorte que les rouleaux restent sensiblement perpendiculaires au vitrage durant toute l'opération d'assemblage. Le réglage de la position d'origine des rouleaux de pressage peut s'effectuer par le biais de leur système de montage sur la poutre transversale. Ce réglage est délicat et long parce que ces dispositifs sont équipés d'un grand nombre de galets de pressage, généralement entre 30 et 40. Ces galets doivent être réglés en hauteur et éventuellement en inclinaison, individuellement ou par paires les uns par rapport aux autres. La position d'origine des rouleaux de pressage est réglée généralement selon la courbure transversale moyenne du vitrage.

Au cours du passage du vitrage entre les rouleaux, la position de ces rouleaux peut varier pour suivre les modifications, lorsqu'elles sont peu importantes, de la courbure transversale du vitrage grâce à leur système de montage par l'intermédiaire de moyens élastiques ou pneumatiques sur la poutre à laquelle ils sont rattachés. Un dispositif de montage utilisant des moyens pneumatiques procurant une grande souplesse aux rouleaux est décrit en particulier dans la publication de brevet européen 0 189 345. Dans ce dispositif, dit "flottant", les chambres de compression des vérins des rouleaux supérieurs et celles des vérins des rouleaux inférieurs sont en communication et la pression pneumatique s'exerçant sur un rouleau de pression est égale à celle s'exerçant sur un rouleau de contre-pression.

Ces dispositifs conviennent généralement pour l'assemblage des vitrages présentant un bombage transversal peu accentué et régulier et lorsque ce bombage transversal du vitrage est sensiblement le même sur toute la longueur du vitrage. Mais pour des vitrages à formes plus complexes, notamment pour des vitrages présentant un bombage très profond dans la section transversale et/ou irrégulier sur la longueur du vitrage, ces dispositifs connus ne sont pas toujours satisfaisants,car ils ne sont pas suffisamment souples pour pouvoir suivre toutes les modifications importantes de courbure. Si la pression est trop faible, il s'ensuit une adhésion insuffisante ou peu homogène des éléments constitutifs du vitrage ou, au contraire, si la pression est trop forte des ruptures du vitrage.

En outre, lorsqu'on passe d'un type de vitrage à un autre type de vitrage de courbure transversale moyenne différente, il est généralement nécessaire de modifier la position d'origine des rouleaux et donc de refaire le réglage.

Dans le domaine technique de la chaudronnerie, le document DE-A-2 033 819 décrit le pressage de tôles par un double ensemble de poinçons, les poinçons supérieurs étant liés à une lame flexible pouvant se cintrer autour d'un gabarit.

L'invention obvie aux inconvénients cités.

L'invention propose un dispositif pour l'assemblage par pressage des vitrages feuilletés symétriques ou asymétriques, capable d'opérer aussi bien sur des vitrages à double bombage peu accentué et régulier, par double bombage, on entend selon l'invention, un vitrage présentant à la fois une courbure longitudinale et à la fois une courbure transversale, que sur des vitrages à formes complexes pouvant présenter des bombages très accentués et/ou irréguliers. Par vitrages feuilletés symétriques, on entend selon l'invention des vitrages feuilletés dont les deux faces sont constituées de feuilles rigides telles des feuilles de verre. Par vitrages feuilletés asymétriques, on entend des vitrages feuilletés formés d'un support rigide monolithique ou feuilleté et d'une feuille souple en matière plastique ayant les propriétés désirées, par exemple les vitrages asymétriques décrits dans les publications de brevets français 2 398 606 et européens 0 132 198 et 0 131 523.

L'invention propose également un dispositif permettant un réglage rapide de la courbure ou position d'origine des rouleaux.

Le dispositif selon l'invention est un dispositif de pressage qui comprend au moins un ensemble de rouleaux de pressage s'étendant transversalement, appartenant à une équipe mobile, cet ensemble étant monté sur une poutre flexible dont on règle la courbure selon un profil désiré, la poutre flexible étant montée articulée sur des montants appartenant à l'équipage mobile et étant tenue par une traverse horizontale appartenant à l'équipage mobile, et ce par l'intermédiaire de moyens de réglage procurant la courbure désirée, par exemple à l'aide de vis, crémaillères, ou autres systèmes mécaniques, ou à l'aide d'un ou de plusieurs vérins pneumatiques.

Différents réglages de la courbure peuvent être envisagés. On peut prévoir un réglage unique qui correspond donc à la courbure d'origine et à la courbure moyenne transversale du vitrage à calandrer. On peut prévoir aussi un réglage de la courbure d'origine, c'est-à-dire d'avant passage du vitrage, puis des variations de ce réglage donc de la courbure en fonction des variations de courbure transversale du vitrage, au fur et à mesure de son avance dans le dispositif.

Le réglage de la courbure d'origine de la poutre flexible est réalisée en fonction du modèle de vitrage, soit manuellement, soit de façon automatique.

Selon une réalisation du dispositif selon l'invention, le réglage de la courbure de la poutre flexible est piloté par un automate ayant la forme du vitrage en mémoire, ou dans une variante, par un automate relié à des capteurs mesurant les profondeurs de bombage du vitrage, ce qui autorise toutes les modifications de courbure désirées au cours du passage du vitrage entre les moyens de pressage.

Dans une réalisation du dispositif, la poutre flexible est formée d'au moins une lame de ressort de dimensions appropriées.

Selon une réalisation avantageuse du dispositif, la poutre flexible est formée de deux lames de ressort de dimensions appropriées, disposées parallèlement et espacées l'une de l'autre pour permettre le passage entre-elles des moyens de montage des rouleaux presseurs et en faciliter ainsi leur montage.

Lorsque le dispositif selon l'invention est une calandreuse comprenant un ensemble de rouleaux supérieurs et un ensemble de rouleaux inférieurs, chacun de ces ensembles est monté avantageusement sur une poutre flexible.

Dans une variante, le dispositif selon l'invention comprend un ensemble de rouleaux inférieurs de pressage, monté sur une poutre flexible, et il comprend en tant que moyens de pressage supérieurs un rouleau presseur cylindrique souple s'étendant sur toute la largeur utile du dispositif, la courbure désirée du rouleau presseur étant fournie par l'action d'appui d'au moins une série de galets supérieurs, comme décrit par exemple dans la publication de brevet européen 0 015 209. Dans cette variante, les galets supérieurs sont également montés sur une poutre flexible.

Ce dispositif est utilisé avantageusement pour la fabrication de vitrages asymétriques formés d'une feuille souple et d'un support rigide, le rouleau presseur cylindrique venant presser la feuille de matière plastique souple sur le support rigide.

Dans une autre variante, le dispositif de pressage selon l'invention comprend en tant que moyens de pressage supérieurs un ensemble de rouleaux supérieurs de pressage, monté conformément à l'invention, sur une poutre flexible, et un support de forme adaptée à la géométrie du vitrage en tant que moyens de pressage inférieurs, ce support pouvant être monté basculant autour d'un ou plusieurs axes horizontaux. Un dispositif de pressage utilisant un support de forme est décrit dans la publication de brevet européen 0 316 224. Ce dispositif peut aussi être équipé d'un rouleau presseur cylindrique souple lorsqu'il est utilisé pour l'assemblage des vitrages asymétriques. Dans ce cas, les galets supérieurs qui viennent appuyer sur le rouleau souple pour lui donner la courbure désirée, sont montés sur la poutre flexible.

Le montage des rouleaux de pressage sur la poutre flexible est réalisé par l'intermédiaire de moyens élastiques tels des ressorts ou des moyens pneumatiques tels des vérins, en particulier des vérins à membrane.

Selon une caractéristique du dispositif selon l'invention, l'ensemble de rouleaux de pressage supérieurs et l'ensemble de rouleaux de pressage inférieurs, tout deux montés sur des poutres flexibles, font partie d'un équipage mobile, lui-même monté sur des moyens le rendant pivotant autour de la ligne de pressage. Avantageusement, en outre, lesdits moyens le rendant pivotant sont prévus pour procurer à l'équipage mobile une possibilité de déplacement vertical selon un mouvement de montée-baisse. Un équipage mobile monté pivotant et coulissant verticalement est décrit par exemple dans la publication de brevet européen 0 290 344.

La courbure de la poutre flexible peut être plus ou moins accentuée selon le profil transversal du vitrage. Cette courbure peut présenter une symétrie ou non.

Pour procurer la courbure désirée à la poutre flexible, le dispositif peut utiliser un ou plusieurs moyens de réglage, reliés à une traverse horizontale comme décrits précédemment, ces moyens étant disposés aux emplacements adéquats sur ladite traverse et cela pour les rouleaux de pressage supérieurs et/ou inférieurs.

Ainsi le dispositif peut être équipé de plusieurs moyens de réglage tel des tiges filetés ou des vérins pouvant agir sur une même poutre flexible, séparemment ou simultanément. On peut ainsi avec ces moyens disposés aux emplacements adéquats, obtenir une courbure symétrique, c'est-à-dire centrée, ou non symétrique, c'est-à-dire décentrée, ou encore plus complexe selon la flexibilité de la poutre et le nombre de moyens de réglage utilisés.

D'autres avantages et caractéristiques du dispositif selon l'invention apparaitront dans la suite de la description d'exemples de réalisations faites en référence aux figures.

La figure 1 est une représentation schématique en élévation d'une réalisation d'un dispositif comprenant un ensemble de rouleaux supérieurs de pressage et d'un ensemble de rouleaux inférieurs de pressage, chacun de ces ensembles étant monté sur une poutre flexible. Ce dispositif peut être utilisé pour l'assemblage par pressage de vitrages feuilletés dont les deux faces extérieures sont formées de feuilles rigides, telles des feuilles de verre.

La figure 2 est une vue de dessus, plus en détail du montage des extrémités des poutres flexibles sur le cadre pivotant du dispositif de la figure 1.

La figure 3 est une vue d'un détail de montage d'un rouleau presseur sur la poutre flexible.

La figure 4 est une représentation schématique d'une variante du dispositif représenté figure 1.

La figure 5 est une représentation schématique en élévation d'une réalisation d'un dispositif comprenant un ensemble inférieur de moyens de pressage montés sur une poutre flexible, et un rouleau presseur supérieur souple, maintenu par des galets supérieurs, eux-mêmes montés sur une poutre flexible.

La figure 6 est une représentation schématique en élévation d'une réalisation d'un dispositif comprenant un ensemble supérieur de moyens de pressage montés sur une poutre flexible, et un support de forme comme moyens inférieurs de pressage.

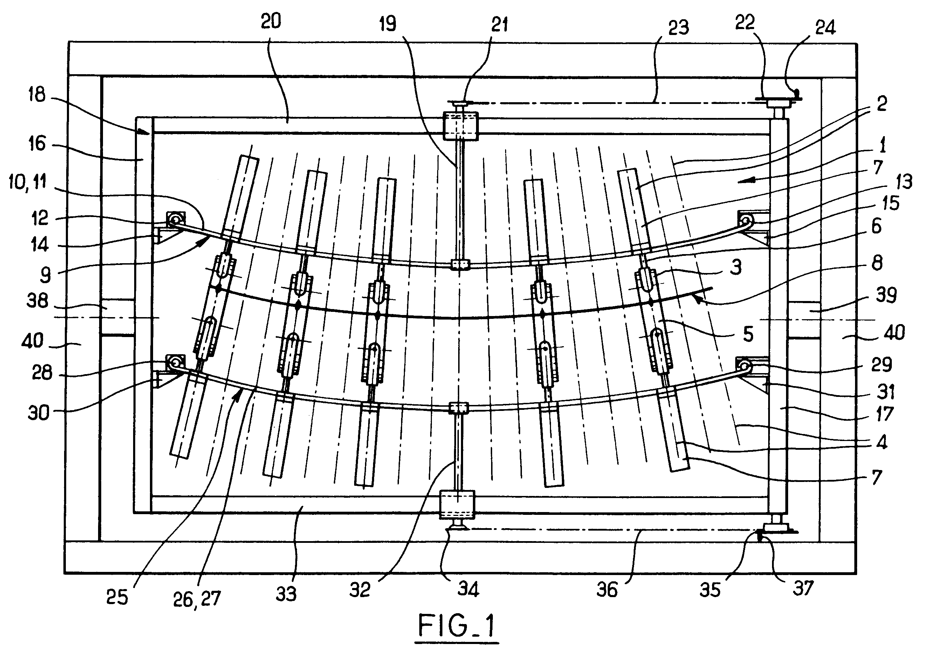

Le dispositif représenté sur la figure 1 comprend un équipage mobile 1 muni d'un ensemble 2 de rouleaux 3 supérieurs de pressage et d'un ensemble 4 de rouleaux 5 inférieurs de pressage (tous les rouleaux ne sont pas représentés). Chaque rouleau 3, 5 est monté par paire au bout d'une tige 6 faisant partie d'un ensemble de réglage 7 permettant de régler le positionnement du rouleau 3, 5 selon la courbure désirée pour la ligne de pressage pour le vitrage à presser 8, les rouleaux supérieurs 3 et les rouleaux inférieurs 5 étant appliqués sur le vitrage par des systèmes pneumatiques non représentés et décrits par exemple dans la publication de brevet européen 0 189 345 déjà citée et faisant partie des ensembles de réglage 7. Les rouleaux supérieurs 3 et leurs ensembles de réglage 7 sont montés sur une poutre flexible 9, formée de deux lames de ressort 10, 11. Les lames de ressort 10, 11 sont montées, comme décrit par la suite, sur des axes 12, 13 portés par des supports 14, 15, sur les deux montants 16, 17 d'un cadre 18 appartenant à l'équipage mobile 1. La poutre flexible 9 formée des deux lames 10, 11 est supportée à l'aide d'un système à tige filetée 19, par une traverse horizontale 20 reliant les deux montants 16, 17 pour former le cadre 18. Ce système à tige filetée est relié par l'intermédiaire d'une transmission à roues dentées 21, 22 et chaîne 23, à une manivelle 24 ou un moteur permettant le réglage de la courbure de la poutre flexible 9.

Les rouleaux inférieurs 5 et leurs ensembles de réglage 7 sont de la même façon montés sur une poutre flexible 25, formée de deux lames de ressorts 26, 27, montées sur des axes 28, 29, portés par des supports 30, 31 sur les deux montants 16, 17 du cadre 18 appartenant à l'équipage mobile 1. La poutre flexible 25 est supportée à l'aide d'un système à tige filetée 32, par une traverse horizontale 33 reliant les deux montants 16, 17 pour former le cadre 18. Ce système à tige filetée est relié par l'intermédiaire d'une transmission à roues dentées 34, 35 et chaîne 36 à une manivelle 37 ou un moteur permettant le réglage de la courbure de la poutre flexible inférieure 25.

L'ensemble 4 des rouleaux inférieurs de pressage comprend au moins deux rouleaux moteurs reliés par un système de transmission à un moteur électrique (non représentés) qui avantageusement est placé sur le cadre mobile à l'emplacement désiré et participe ainsi à l'équilibrage de l'équipage mobile.

Le cadre 18 et l'équipage mobile 1 sont montés pivotants autour de deux arbres horizontaux alignés 38, 39 s'emmenchant d'un côté dans les deux montants 16, 17 et portés de l'autre par des paliers (non représentés) appartenant au bâti 40 du dispositif. Dans une réalisation du dispositif, on peut prévoir un montage des arbres horizontaux 38, 39 permettant un mouvement de montée-baisse du cadre mobile 18 sur le bâti.

Le dispositif ci-dessus permet notamment l'assemblage de vitrages feuilletés plans ou bombés. Les vitrages bombés peuvent présenter un bombage dans le sens transversal, accentué, symétriquement, ou non, par rapport à l'axe longitudinal médian du vitrage. Pour passer d'un type de vitrage à un autre, par exemple, pour passer du pressage d'un vitrage présentant un certain bombage transversal, au pressage d'un vitrage présentant un bombage transversal très différent, il suffit de modifier la courbure des poutres flexibles, c'est-à-dire des lames de ressort sans modifier la disposition des ensembles de réglage 7 les uns par rapport aux autres, ni par rapport aux lames de ressort sur lesquels ils sont montés.

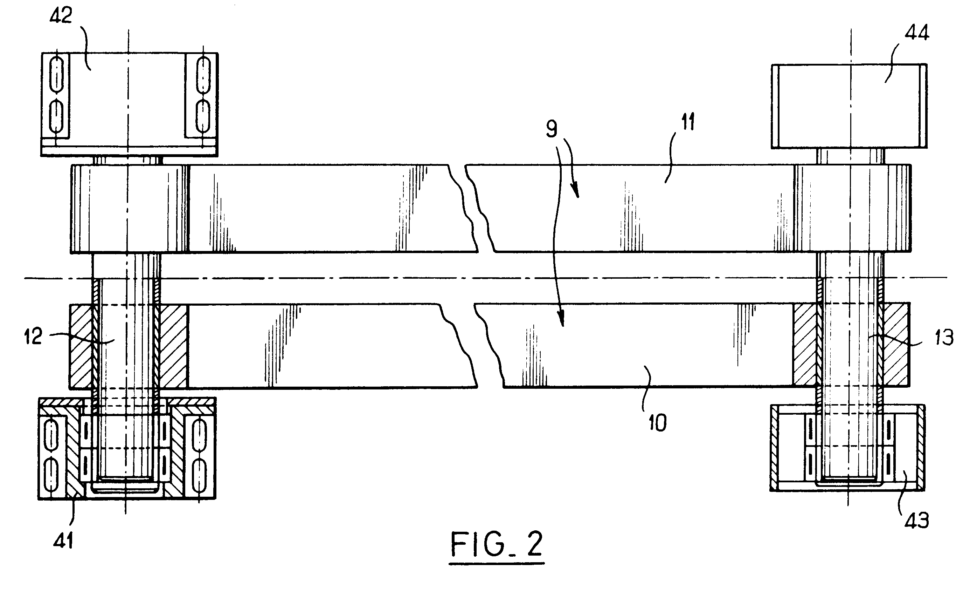

Sur la figure 2, on a représenté le montage des lames de ressorts 10, 11 de la poutre flexible 9 supérieure sur le cadre pivotant 18 (non représenté ici). Les lames de ressorts 10, 11, dont les dimensions sont par exemple de 5 cm de large et de 1 cm d'épaisseur, présentent des extrémités recourbées pour venir entourer deux axes 12, 13, l'un fixe et l'autre coulissant 13 pouvant se déplacer transversalement selon la courbure qui est imposée aux lames.

Les deux lames de ressorts 10, 11 sont disposées parallèlement et elles sont séparées l'une de l'autre par un espace permettant le montage des ensembles de réglage des rouleaux presseurs supérieurs (non représentés sur cette figure).

L'axe fixe 12 est monté sur deux paliers 41, 42 solidaires d'un support 14 lié au montant 16 du cadre pivotant 18. L'axe coulissant 13 est monté dans deux cages 43, 44 autorisant un déplacement transversal selon la variation de la courbure des deux lames. Les cages 43, 44 comme les paliers décrits précédemment sont montées sur un support 15 lié à l'autre montant 17 du cadre pivotant.

Le montage des deux lames de ressorts 26, 27 constituant la poutre flexible 25 portant les rouleaux de pressage inférieurs 5 est identique à celui du montage décrit ci-dessus pour les deux lames 10, 11 constituant la poutre flexible supérieure 9.

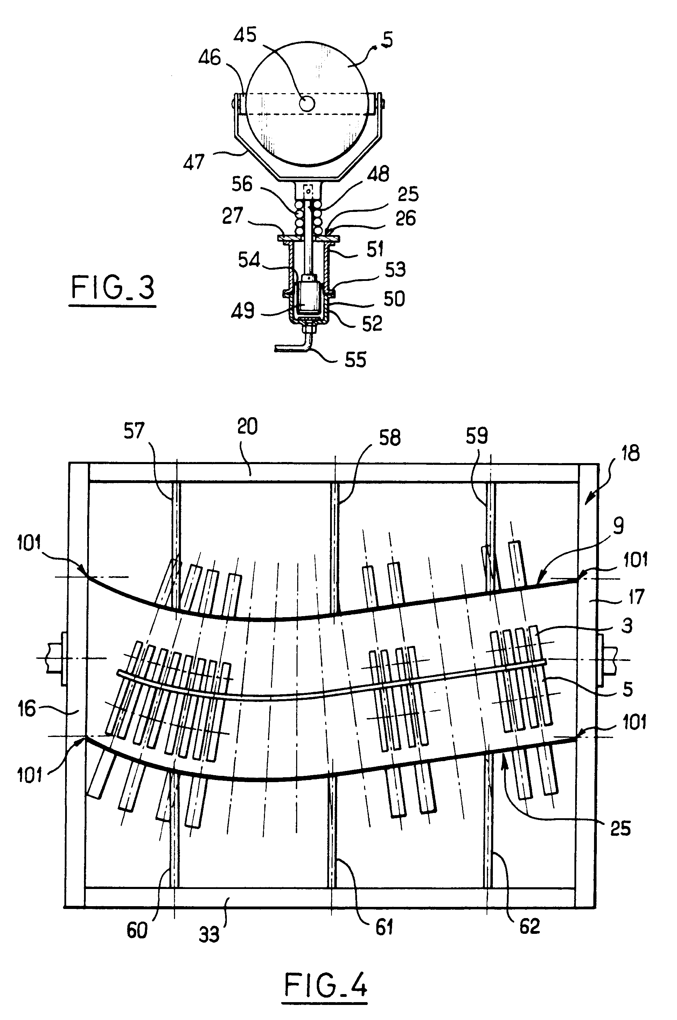

Sur la figure 3, on a représenté un exemple de montage des rouleaux de pressage inférieurs 5 sur la poutre flexible 25 formée des deux lames 26, 27. Les rouleaux 5 sont montés par paires en rotation autour d'un axe 45 monté dans une pièce de tourillonnement 46, elle-même montée dans une chape 47. La chape 47 est monté à l'extrémité supérieure de la tige 48 d'un vérin formé d'un piston 49 qui peut se déplacer selon un mouvement de montée-baisse à l'intérieur d'un cylindre pneumatique 50 formé de deux parties 51, 52 attachées l'une à l'autre par un assemblage à brides 53. Entre les deux brides est pincée une membrane élastique 54. La pression pneumatique introduite par la conduite de pression 55 dans le cylindre pneumatique 50 agit sur la membrane 54 qui transmet la pression au piston 49. Le cylindre de pression 50 est fixé sur les deux lames de ressort 26, 27 constituant la poutre flexible 25. Entre la poutre flexible 25 et la chape 47, un ressort 56 est avantageusement prévu autour de la tige 48 du piston 49 . La fonction de ce ressort 56 est de compenser le poids de l'ensemble mobile des rouleaux presseurs inférieurs et supérieurs en montée-baisse.

Après le passage de la feuille de verre entre les paires de rouleaux, les rouleaux restent ainsi dans la position correspondant à la hauteur du passage de la feuille et ne s'affaissent pas dans une position d'extrémité inférieure sous l'effet de leur propre poids.

Le montage des rouleaux supérieurs 3 est analogue au montage décrit ci-dessus pour les rouleaux inférieurs 5. Il n'est pas nécessaire cependant de placer un ressort autour des tiges des vérins actionnant les rouleaux supérieurs comme c'est le cas pour les vérins actionnant les rouleaux inférieurs. Les cylindres de pressions des rouleaux inférieurs et des rouleaux supérieurs qui leur font face sont en communication de sorte que la pression s'exerçant sur les deux faces du vitrage à calandrer par l'intermédiaire de rouleaux sont égales.

Sur la figure 4, on a représenté une variante du dispositif décrit en relation avec la figure 1. Dans cette variante, les deux poutres flexibles 9, 25 constituées à nouveau chacune de deux lames de ressorts parallèles sont reliées aux traverses horizontales 20, 33 appartenant au cadre mobile pivotant 18 par 3 systèmes d'attache réglables en longueur, à tige filetée ou vérin 57, 58, 59 pour la poutre flexible supérieure et 3 autres systèmes d'attache réglables en longueur, à tige filetée ou vérin 60, 61, 62. Les liaisons entre les systèmes d'attache et les poutres flexibles d'une part, et les traverses horizontales, le cas échéant, d'autre part, sont avantageusement articulées. Les systèmes d'attache réglables peuvent être connectés ou déconnectés par paires selon le profil (ou la courbure) transversal désiré. On peut par exemple utiliser uniquement les systèmes d'attache 58 et 61 pour une courbure symétrique ou uniquement les systèmes d'attache 57 et 60 ou 59 et 62 pour une courbure non symétrique décentrée. On peut utiliser 4 systèmes en combinaison ou les 6 systèmes d'attache par exemple pour avoir une courbure plus complexe comme c'est le cas représenté sur la figure.

On peut avantageusement prévoir une possibilité de modification de la position des points de montage 101 des poutres flexibles sur les montants latéraux 16, 17. Cette modification peut être programmée.

Dans la variante, représentée sur la figure 4, le dispositif peut être utilisé pour l'assemblage de vitrage dont la courbure transversale est complexe.

Les dispositifs représentés sur les figures 1 et 4 peuvent être pilotés par un automate ayant la forme des vitrages à assembler en mémoire. L'automate pilote la position des rouleaux de pressage en agissant sur la courbure des poutres flexibles. Avant l'entrée d'un vitrage dans la ligne de pressage, il procure une courbure correspondant à la position d'origine des rouleaux et ensuite au fur et à mesure de l'avance du vitrage entre les rouleaux, il peut modifier cette courbure en fonction des variations de la courbure du vitrage à assembler.

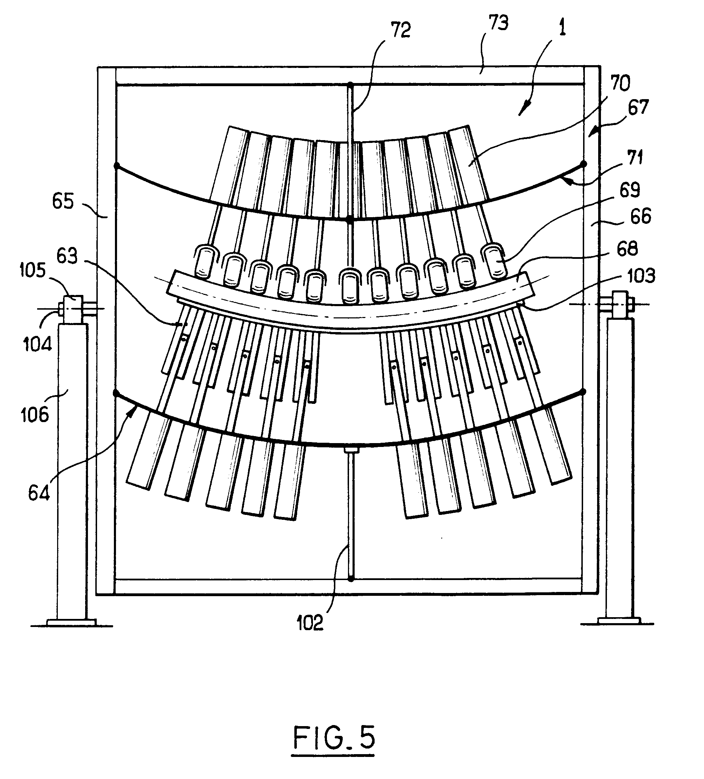

Le dispositif représenté sur la figure 5 comprend un ensemble inférieur de rouleaux de pressage 63 porté par une poutre flexible 64 formée également de deux lames de ressort, dont les extrémités sont montées autour d'axes sur les deux montants 65, 66 du cadre pivotant 67 de l'équipage mobile 1 et qui est supportée par un système d'attache réglable 102, par exemple un système à tige filetée ou un vérin. Les moyens de pressage supérieurs sont ici constitués d'un rouleau presseur souple 68 s'étendant sur toute la largeur utile du dispositif, cintré sous l'action de galets supérieurs 69, montés par l'intermédiaire de leurs ensembles de montage 70, sur une poutre flexible 71 reliée par un système d'attache réglable 72 à la traverse supérieure 73 qui fait partie du cadre mobile 67. Des rouleaux d'appui (non représentés) peuvent venir s'appliquer en amont et en aval du rouleau presseur 68 et l'empêcher de s'échapper de l'action des galets supérieurs presseurs. Le cadre 67 pivote autour de deux axes 74, portés par des paliers 75, montés sur le bâti 76.

Ce dispositif peut être utilisé pour l'assemblage par calandrage d'un vitrage 103 formé d'un support rigide et d'une feuille de matière plastique souple. Dans ce cas, le rouleau presseur souple exerce son action sur la feuille de matière plastique, et les rouleaux inférieurs sur la face inférieure du support rigide.

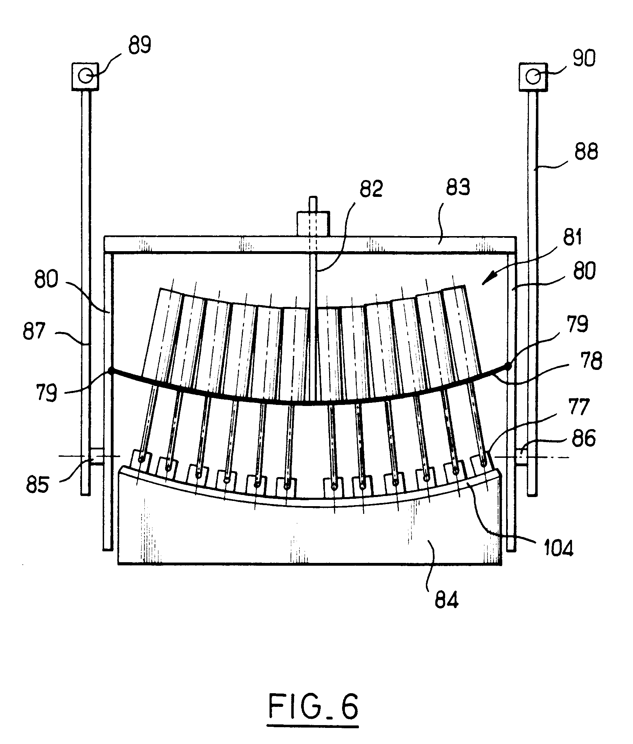

Le dispositif représenté schématiquement sur la figure 6 comprend un ensemble de rouleaux de pressage supérieurs 77 monté sur une poutre flexible 78, formée de deux lames de ressort, montée autour d'axes horizontaux 79, portés par les montants 80 d'un équipage mobile 81 et supportée par l'intermédiaire d'un système d'attache réglable 82 à une traverse supérieure 83 reliant les deux montants verticaux 80. La partie inférieure du dispositif est formée d'un support 84 qui épouse la forme du vitrage 104 à assembler. Les deux montants verticaux 80 peuvent pivoter autour de deux axes horizontaux 85, 86, portés par deux bras 87, 88 montés coulissant selon un mouvement horizontal le long de deux rails horizontaux 89, 90 s'étendant perpendiculairement à la poutre flexible 78 portant l'ensemble des rouleaux de pressage supérieurs 77.

Dans une variante de ce dispositif, on peut remplacer l'ensemble des rouleaux de pressage supérieurs par un ensemble presseur comprenant un rouleau presseur souple cintré sous l'action de galets supérieurs, comme celui décrit en relation avec la figure 5. Dans ce cas, on considérera que les galets supérieurs sont les rouleaux de pressage qui selon l'invention sont montés sur une poutre flexible.

## Revendications

1. Dispositif pour l'assemblage par pressage d'un vitrage feuilleté (8), comprenant au moins un ensemble (2, 4) de rouleaux de pressage (3, 5) s'étendant transversalement, appartenant à un équipage mobile (1), caractérisé en ce que l'ensemble de rouleaux de pressage est monté sur une poutre flexible (9, 25) dont la courbure peut être modifiée et réglée selon un profil désiré, la poutre flexible (9, 25) étant montée articulée sur des montants (16, 17) appartenant à l'équipage mobile (1) et étant tenue par une traverse horizontale (20, 33) appartenant à l'équipage mobile (1) par l'intermédiaire de moyens de réglage (19, 32) procurant la courbure désirée.

2. Dispositif selon la revendication 1, caractérisé en ce que chaque poutre flexible (9, 25) est constituée d'au moins une lame de ressort (10, 11, 26, 27).

3. Dispositif selon la revendication 2, caractérisé en ce que chaque poutre flexible est constituée de deux lames de ressorts (10, 11, 26, 27) disposées parallèlement et espacées pour permettre la fixation des éléments de montage des rouleaux.

4. Dispositif selon une des revendications 1 à 3, caractérisé en ce qu'il comprend un second ensemble de rouleaux de pressage porté par une seconde poutre flexible.

5. Dispositif selon une des revendications 1 à 3, caractérisé en ce que l'ensemble de rouleaux de pressage (63) porté par la poutre flexible (64) est un ensemble inférieur et en ce que les moyens de pressage supérieurs comprennent un rouleau souple (68) cintré sous l'action de galets supérieurs (69), eux-mêmes montés sur une poutre flexible (71).

6. Dispositif selon une des revendications 1 à 3, caractérisé en ce que l'ensemble de rouleaux de pressage (77) porté par la poutre flexible (78) est un ensemble supérieur et en ce que le dispositif comprend un support de forme (84) adaptée à la géométrie du vitrage en tant que moyens de pressage inférieurs.

7. Dispositif selon une des revendications 1 à 6, caractérisé en ce que les moyens de réglage de la courbure de la poutre flexible sont des systèmes à tige filetée (19, 32) ou des vérins.

8. Dispositif selon une des revendications 1 à 7, caractérisé en ce que chaque poutre flexible est montée sur le cadre autour de deux articulations, l'une d'elles au moins étant montée sur un système coulissant (13, 29) transversalement.

9. Dispositif selon une des revendications 1 à 8, caractérisé en ce que le réglage de la position des poutres est piloté par un automate ayant la forme du vitrage en mémoire.

10. Dispositif selon une des revendications 1 à 9, caractérisé en ce que les ensembles de montage des rouleaux presseurs inférieurs comprennent un ressort (56) pour compenser le poids de l'ensemble mobile des rouleaux presseurs.

11. Dispositif selon une des revendications 1 à 10, caractérisé en ce que la courbure de chaque poutre flexible est réalisée par plusieurs moyens de réglage (57, 58, 59, 60, 61, 62) agissant séparément ou en combinaisons.

12. Dispositif selon une des revendications 1 à 11, caractérisé en ce que les rouleaux sont montés sur la poutre flexible par l'intermédiaire d'ensembles de montage comprenant des moyens pneumatiques (49, 50).

13. Dispositif selon la revendication 12, caractérisé en ce que les moyens pneumatiques sont des vérins à membrane, les chambres de compression (50) des vérins commandant les rouleaux inférieurs étant en communication avec les chambres de compression (50) des vérins commandant les rouleaux supérieurs.

14. Dispositif selon une des revendications 1 à 13, caractérisé en ce qu'il comprend des rouleaux moteur actionnés par un moteur monté sur le cadre mobile (1).

## Claims

1. Device for assembling, by pressing, a laminated pane (8), comprising at least one assembly (2, 4) of pressing rollers (3, 5) extending transversely, forming part of a movable equipment unit (1), characterized in that the assembly of pressing rollers is mounted on a flexible beam (9, 25), the curvature of which can be modified and adjusted to a desired profile, the flexible beam (9, 25) being mounted articulated on upright members (16, 17) forming part of the movable equipment unit (1) and being held by a horizontal transverse member (20, 33) forming part of the movable equipment unit (1) through the intermediary of adjustment means (19, 32) producing the desired curvature.

2. Device according to Claim 1, characterized in that each flexible beam (9, 25) is constituted of at least one spring strip (10, 11, 26, 27).

3. Device according to Claim 2, characterized in that each flexible beam is constituted of two spring strips (10, 11, 26, 27), disposed parallel and spaced apart to permit fixing of the mounting elements for the rollers.

4. Device according to one of Claims 1 to 3, characterized in that it comprises a second assembly of pressing rollers carried by a second flexible beam.

5. Device according to one of Claims 1 to 3, characterized in that the assembly of pressing rollers (63) carried by the flexible beam (64) is a lower assembly and in that the upper pressing means comprise a flexible roller (68), curved under the action of upper small wheels (69), themselves mounted on a flexible beam (71).

6. Device according to one of Claims 1 to 3, characterized in that the assembly of pressing rollers (77) carried by the flexible beam (78) is an upper assembly and in that the device comprises a shaped support (84) adapted to the geometry of the pane as lower pressing means.

7. Device according to one of Claims 1 to 6, characterized in that the adjustment means for the curvature of the flexible beam are threaded rod systems (19, 32) or jacks.

8. Device according to one of Claims 1 to 7, characterized in that each flexible beam is mounted on the frame about two articulations, at least one of them being mounted on a transversely sliding system (13, 29).

9. Device according to one of Claims 1 to 8, characterized in that the adjustment of the position of the beams is governed by an automatic controller having the shape of the pane in its memory.

10. Device according to one of Claims 1 to 9, characterized in that the mounting assemblies for the lower pressing rollers comprise a spring (56) for compensating the weight of the movable assembly of the pressing rollers.

11. Device according to one of Claims 1 to 10, characterized in that the curvature of each flexible beam is realized by several adjustment means (57, 58, 59, 60, 61, 62) acting separately or in combinations.

12. Device according to one of Claims 1 to 11, characterized in that the rollers are mounted on the flexible beam through the intermediary of mounting assemblies comprising pneumatic means (49, 50).

13. Device according to Claim 12, characterized in that the pneumatic means are diaphragm jacks, the compression chambers (50) of the jacks governing the lower rollers being in communication with the compression chambers (50) of the jacks governing the upper rollers.

14. Device according to one of Claims 1 to 13, characterized in that it comprises driving rollers driven by a motor mounted on the movable frame (1).

## Patentansprüche

1. Vorrichtung zur Herstellung einer Verbundverglasung (8) durch Pressen, welche wenigstens eine Einheit (2, 4) aus quer verlaufenden Preßrollen (3, 5) umfaßt, die zu einer beweglichen Einrichtung (1) gehört, **dadurch gekennzeichnet, daß** die Preßrolleneinheit auf einem flexiblen Träger (9, 25) angebracht ist, dessen Durchbiegung gemäß einem gewünschten Profil verändert und geregelt werden kann, der an Vertikalstützen (16, 17) gelenkig befestigt ist, die zur beweglichen Einrichtung (1) gehören, und über Regelungsmittel (19, 32), welche die gewünschte Durchbiegung sicherstellen, von einer horizontalen Traverse (20, 33) gehalten wird, die zur beweglichen Einrichtung (1) gehört.

2. Vorrichtung nach Anspruch 1, **dadurch gekennzeichnet, daß** jeder flexible Träger (9, 25) aus wenigstens einer Blattfeder (10, 11, 26, 27) besteht.

3. Vorrichtung nach Anspruch 2, **dadurch gekennzeichnet, daß** jeder flexible Träger aus zwei Blattfedern (10, 11, 26, 27) besteht, die mit Abstand voneinander parallel angeordnet sind, um das Anbringen der Befestigungselemente der Rollen zu ermöglichen.

4. Vorrichtung nach einem der Ansprüche 1 bis 3, **dadurch gekennzeichnet, daß** sie eine zweite Preßrolleneinheit umfaßt, die von einem zweiten flexiblen Träger getragen wird.

5. Vorrichtung nach einem der Ansprüche 1 bis 3, **dadurch gekennzeichnet, daß** die Preßrolleneinheit (63), die von dem flexiblen Träger (64) getragen wird, eine untere Einheit ist **und daß** die oberen Preßmittel eine nachgiebige Walze (68) umfassen, die unter der Wirkung von oberen Rollen (69) gebogen wird, die ihrerseits an einem flexiblen Träger (71) angebracht sind.

6. Vorrichtung nach einem der Ansprüche 1 bis 3, **dadurch gekennzeichnet, daß** die Preßrolleneinheit (77), die von dem flexiblen Träger (78) getragen wird, eine obere Einheit ist **und daß** die Vorrichtung als unteres Preßmittel eine geformte Auflage (84) umfaßt, welche an die Geometrie der Verglasung angepaßt ist.

7. Vorrichtung nach einem der Ansprüche 1 bis 6, **dadurch gekennzeichnet, daß** die Regelungsmittel für die Durchbiegung des flexiblen Trägers Schraubenspindelsysteme (19, 32) oder Zylinder sind.

8. Vorrichtung nach einem der Ansprüche 1 bis 7, **dadurch gekennzeichnet, daß** jeder flexible Träger am Rahmen um zwei Gelenke angebracht ist, wovon wenigstens eines auf einem quer hin- und herbeweglichen System (13, 29) befestigt ist.

9. Vorrichtung nach einem der Ansprüche 1 bis 8, **dadurch gekennzeichnet, daß** die Regelung der Position der Träger von einem Automaten gesteuert wird, in dessen Speicher sich die Form der Verglasung befindet.

10. Vorrichtung nach einem der Ansprüche 1 bis 9, **dadurch gekennzeichnet, daß** die Befestigungseinheiten der unteren Preßrollen zur Kompensation des Gewichts des beweglichen Teils der Preßrollen eine Feder (56) enthalten.

11. Vorrichtung nach einem der Ansprüche 1 bis 10, **dadurch gekennzeichnet, daß** die Durchbiegung jedes flexiblen Trägers durch mehrere Regelungsmittel (57, 58, 59, 60, 61, 62) erzeugt wird, die einzeln oder kombiniert wirken.

12. Vorrichtung nach einem der Ansprüche 1 bis 11, **dadurch gekennzeichnet, daß** die Rollen über Befestigungseinheiten, die pneumatische Mittel (49, 50) enthalten, am flexiblen Träger angebracht sind.

13. Vorrichtung nach Anspruch 12, **dadurch gekennzeichnet, daß** die pneumatischen Mittel Membranzylinder sind, wobei die Kompressionskammern (50) der Zylinder, welche die unteren Rollen steuern, mit den Kompressionskammern (50) der Zylinder, welche die oberen Rollen steuern, in Verbindung stehen.

14. Vorrichtung nach einem der Ansprüche 1 bis 13, **dadurch gekennzeichnet, daß** sie Antriebsrollen enthält, die von einem Motor angetrieben werden, der an dem beweglichen Rahmen (1) befestigt ist.
